(19) Europäisches Patentamt
European Patent Office
Office européen des brevets

(11) EP 1 840 172 A2

(12) EUROPEAN PATENT APPLICATION

(43) Date of publication:
**03.10.2007 Bulletin 2007/40**

(51) Int Cl.:
***C09B 67/10*** *(2006.01)* ***C09B 67/20*** *(2006.01)*
***B01J 19/00*** *(2006.01)*

(21) Application number: **07005915.9**

(22) Date of filing: **22.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.03.2006 JP 2006078645**

(71) Applicant: **FUJIFILM Corporation**
**Minato-ku**
**Tokyo (JP)**

(72) Inventors:
- **Sato, Tadahisa**
**Ashigarakami-gun**
**Kanagawa 258-8577 (JP)**
- **Maeta, Hideki**
**Ashigarakami-gun**
**Kanagawa 258-8577 (JP)**

(74) Representative: **HOFFMANN EITLE**
**Patent- und Rechtsanwälte**
**Arabellastrasse 4**
**81925 München (DE)**

# (54) Method of producing organic pigment fine-particles, and organic pigment fine-particles obtained thereby and liquid dispersion of the same

(57) A method of producing organic pigment fine-particles, comprising: bringing a solution of an organic pigment soluble form dissolved in an organic solvent in a flow reactor; and converting the organic pigment soluble form into an organic pigment in the course of flow of said solution.

EP 1 840 172 A2

## Description

FIELD OF THE INVENTION

The present invention relates to a method of producing organic pigment fine-particles. In particular, the present invention relates to a method of producing organic pigment fine-particles stably dispersible in an organic solvent, to organic pigment fine-particles produced by the method, and to a liquid dispersion containing the fine-particles.

BACKGROUND OF THE INVENTION

Full-fledged research activities in the field of inkjet printing toward practical applications started in the 1960s. The 1980s and 1990s saw the rapid development of inkjet printing, which is considered to be a printing technology highly economical, as the development of digital information technology, for example, personal computers and networks evolved. Then, by virtue of advances in image quality enhancement driven by improved dye and pigment color materials for ink for forming images and improved ink mixing, ink ejection, penetration into recording medium, and drying technologies for the dyes and pigments, inkjet printers whose image quality and durability are close or superior to those of silver halide photography have been recently developed.

The composition, dispersion medium, viscosity, surface tension, specific gravity, and other physical properties required of ink for inkjet need to be controlled according to ink ejection methods (e.g. a piezoelectric ejection method, a bubble jet method) and nozzle features. If this matching fails, normal printing cannot be ensured. Ordinary inkjet printers for computer outputs use aqueous dye inks containing water soluble dyes dissolved in an aqueous solvent. Printing with aqueous dye inks, however, involves problems of low resistance to light, oxidation, and water.

As a viable solution to these problems, the use of carbon black and organic pigments came under consideration, and aqueous pigment inks of pigment fine-particles dispersed in water have been used. Images printed with aqueous pigment inks have significant advantages over images printed with dye inks in terms of fastness to light and resistance to water.

Although aqueous inks work advantageously on paper, which is a liquid-absorbing recording medium, they cannot be used for printing on other media such as plastic, metal, and ceramics. To address this issue, there have been developed solvent inks (oil inks) whose bases are organic solvents as those used for general printing, solid (or phase-change) inks that are solid at ordinary temperature but ejected in the heated and melted state, and ultraviolet (UV)-curable inks (including inks capable of curing by UV, electron beam, radiation, and other electromagnetic wave irradiation) that are cured by UV, electron-beam, and other electromagnetic wave irradiation once they reach the surface of media.

The UV-curable inks for inkjet contain pigments as color materials (colorants). The pigments must be stably dispersed in a photopolymerizable monomer or oligomer which is used in the inkjet inks as an organic solvent. The liquid dispersions of the pigments are usually prepared by breakdown methods. A usual operation of the breakdown methods is to disperse pigment and a mixture of a dispersing agent and a monomer in a bead mill at low temperature, for example. According to those methods, however, it is not easy to reduce the size of pigment particles down to 100 nm or less, and it is difficult to ensure a size of 50 nm or less with good uniformity, which is generally considered to be preferable for image formation, thereby making it extremely difficult to put those methods into industrial practice. Therefore, the development of a method which enables mass-production of a liquid dispersion of 50-nm or smaller fine-particles has long been desired.

Color filters for use in charge-coupled device (CCD) sensors of digital cameras and in liquid crystal displays (LCDs) employ organic pigment fine-particles dispersible in an organic solvent. These applications have given rise to a need for thinner color filters in pursuit of higher image quality. The thickness of color filter largely depends on the particle diameter of an organic pigment to be used. Therefore, there is a demand for the development of a method of mass-producing pigment particles, for example, of 50-nm or smaller, which are stably dispersed in an organic solvent.

Under those situations, in various fields, there is a rising expectations of the development of organic pigment fine-particles stably dispersible in an organic solvent and of a dispersing agent therefor, and in particular of a method of effectively producing a liquid dispersion of nanometer-size pigment fine-particles.

To meet the expectations, there are methods called reprecipitation (see JP-A-6-79168 ("JP-A" means unexamined published Japanese patent application), JP-A-2004-91560, and "Nanoscience and Technology -Single Organic Nanoparticles-", Chapter 2, 14, 29, Spring-Verlag, Berlin, 2003). These methods are so versatile that they can be applied to nano-size crystallization of organic pigments and $\pi$-conjugated organic substances and polymers (e.g. polydiacetylene, perylene, fullerene, other low-molecular-weight aromatic compounds, and organic sulfur dyes) that have electronic and optical characteristics worth attention. There are several modes for the reprecipitation. One mode is a method of: dissolving an organic compound, which is to be fine-crystallized, in a solvent, i.e. a good solvent, in which the organic compound dissolves well; and, pouring the resultant solution into a solvent, i.e. a bad solvent, in which the organic compound hardly dissolves, while being vigorously stirred, thereby causing reprecipitation and deposition of the organic

compound. Another mode (supercritical reprecipitation) is a method of: dissolving an organic compound, which is to be fine-crystallized, in a supercritical state in a solvent in which the organic compound tends not to dissolve under normal conditions; and, mixing the resultant solution with a solvent for cooling, thereby achieving nano-crystallization. However, either mode of the reprecipitation method involves fine-crystallization while a solution is stirred. Thus, the effects of stirring become uneven when scaling up. It is therefore extremely difficult to reproduce the characteristics of fine- particles in smaller scales, from the viewpoint, for example, of a particle size distribution.

On the other hand, another method, so-called 'micro chemical process technology', to cause a chemical reaction, using a reaction channel having a micro cross-section of the channel, has been recently drawing attention (see by W. Ehrfeld, V. Hessel, and H. Loewe, "Microreactor", 1st Edition., Wiley-VCH, 2000). The micro chemical process technology is a material production and chemical analysis technology using chemical and physical phenomena developed in a micro channel having a width of several micrometers to several hundred micrometers formed on a solid substrate through a micro processing technology, for example.

Laminar flow is dominant in a microscopic space since the Reynolds number is small, and mixing in this microscopic space is achieved through molecular diffusion via interfaces in many cases. In such a microscopic space, the specific surface area of each interface is large and the distance of molecular transfer can be kept short, thereby allowing mixing instantly through molecular diffusion via the interfaces. This mixing method therefore provides more precise and higher-speed mixing than turbulent mixing with a stirring device at usual macro scales. Furthermore, the method generally involves conducting a reaction while flowing, and the flow rate can be precisely controlled, thereby allowing precise control of reaction time. In addition, the method facilitates heat transfer, thereby allowing precise control of temperature.

Specifically, as a method of producing a liquid dispersion of pigment fine-particles, there has been recently disclosed a method of: changing pH of a pigment solution, which has been prepared by dissolving the pigment in an alkaline solvent, in a micro channel (see JP-A-2005-307154). However, that method relates to a method of producing pigment fine-particles dispersed in water, but not those dispersed in an organic solvent.

Meanwhile, a technique is disclosed to produce a color film. For example, JP-A-8-6242 discloses a resist composition which can be structured by, for example, cross-linking by heat or the like, using a soluble pigment precursor that can be converted into insoluble pigment particles by chemical, thermal or photolysis means. The film thus obtained results in uneven reduction in the polymer film thickness, since a part of the soluble pigment precursor leaves and vaporizes when converted into pigment particles, and the resultant film is low in dimensional accuracy, in particular smoothness of the coated film. To address this issue, for example, JP-A-2001-81350 discloses a method of producing a colored material, which method has: providing a solution containing a soluble pigment precursor that can be converted into an insoluble pigment, a solvent that can dissolve the soluble pigment precursor, and a stabilizer that is composed of an organic substance having a structure or functional group which can stabilize dispersibility of the pigment made into insoluble in the solvent; and converting the soluble pigment precursor into the insoluble pigment, thereby to obtain the colored material which is present as a stable dispersion of the insoluble pigment in the solvent. JP-A-2001-81350, however, has no mention whether good pigment fine-particles could be obtained or not. Further, the method disclosed in JP-A-2001-81350 uses an acid in converting the precursor to pigment. If this acid is not removed, the resultant colored material cannot be used for a precise electronic part, such as a color filter. When doing conduct removal of the acid, it is necessary to carry out filtering out of the solid substances deposited while the pigment dispersion is concentrated, washing the resultant solid substances, and further conducting recrystallization/redissolving before use. Therefore, since such the troublesome operations are needed, that method is not practical.

## SUMMARY OF THE INVENTION

An object of the present invention is to provide a method of effectively producing organic pigment fine-particles quite small in particle diameter and high in monodispersity, which are capable of being dispersed in a solvent, through a build-up method. Another object of the present invention is to provide organic pigment fine-particles obtained by the producing method. Still another object of the present invention is to provide a liquid dispersion in which the organic pigment fine-particles are stably dispersed in an organic solvent.

Other and further objects, features and advantages of the invention will appear more fully from the following description, appropriately referring to the accompanying drawings.

## BRIEF DESCRIPTION OF THE DRAWINGS

Fig. 1 is a schematic plane view showing a preferable embodiment of a flow reactor that can be used in the producing method of the present invention.

Fig. 2 is a sectional view showing the cross-section along the line I-I of the flow reactor of Fig. 1.

DETAILED DESCRIPTION OF THE INVENTION

According to the present invention, there is provided the following means:

(1) A method of producing organic pigment fine-particles, comprising the steps of:

bringing a solution of an organic pigment soluble form dissolved in an organic solvent in a flow reactor; and converting the organic pigment soluble form into an organic pigment in the course of flow of said solution;

(2) The method of producing organic pigment fine-particles according to (1), wherein the organic pigment soluble form is a compound convertible to the organic pigment through a thermal reaction;
(3) The method of producing organic pigment fine-particles according to (2), wherein the conversion of the organic pigment soluble form into the organic pigment while flowing is carried out by heating to 150°C or higher;
(4) The method of producing organic pigment fine-particles according to any one of (1) to (3), wherein the conversion of the organic pigment soluble form into the organic pigment is carried out, in the presence of a dispersing agent which can stabilize the organic pigment fine-particles;
(5) The method of producing organic pigment fine-particles according to any one of (1) to (4), wherein the flow reactor has a channel of an equivalent diameter of 1 mm or less;
(6) The method of producing organic pigment fine-particles according to (5), wherein the reactor having the channel of an equivalent diameter of 1 mm or less is a microreactor;
(7) Organic pigment fine-particles produced by the method according to any one of (1) to (6);
(8) The method of producing organic pigment fine-particles according to any one of (1) to (6), wherein the organic pigment fine-particles are produced as a liquid dispersion thereof; and
(9) A liquid dispersion of organic pigment fine-particles produced by the method according to (8).

The present invention is described in detail hereinafter.
The flow reactor that can be used in the production method of the present invention preferably has a channel (flow passage) of an equivalent diameter of 10 mm or less, more preferably a channel of an equivalent diameter of 1 mm or less. First, the equivalent diameter is described in below.
The equivalent diameter is a term also called a corresponding diameter, and in the present invention, the term is used in the same meaning as usually used in the field of mechanical engineering. That is, if a cylindrical pipe whose sectional area is equivalent to a pipe (or a channel in the production method of the present invention) having any sectional shape is assumed, the diameter of the equivalent cylindrical pipe corresponds to the equivalent diameter. The equivalent diameter ($d_{eq}$) is defined as:

$$d_{eq} = 4A/p$$

in which A is a sectional area of the pipe, and p is a wetted perimeter length (circumferential length) of the pipe. In the case of the cylindrical pipe, this equivalent diameter is equal to the diameter of the cylindrical pipe. The equivalent diameter is used for presuming fluidity or heat conducting characteristic of the pipe, on the basis of data of the equivalent cylindrical pipe, and expresses a spatial scale (a representative length) of a phenomenon. The equivalent diameter is:

$$d_{eq} = 4a^2/4a = a$$

in a squared pipe having a side length of a, and

$$d_{eq} = a/\sqrt{3}$$

in a triangle pipe having a side of a.
Further, the equivalent diameter is:

$$d_{eq} = 2h$$

in a flow between paralleled plates having a channel height (h) (see, for example, edited by Nippon Kikai Gakkai, "Kikai Kougaku Jiten (Dictionary of Mechanical Engineering)," 1997, published by Maruzen, K. K.).

When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and in parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$Re = D<\nu_x>\rho/\mu$$

wherein D represents the equivalent diameter of the pipe, $<v_x>$ represents the sectional average velocity, $\rho$ represents the density of the flow (fluid), and $\mu$ represents the viscosity of the flow. As can be understood from this equation, the Reynolds number is smaller as the equivalent diameter is smaller. Therefore, in the case that the equivalent diameter is in the order of $\mu$m, a stable laminar flow is apt to be formed. In addition, because the physical properties of the liquid, such as the density and the viscosity thereof, also have influence on the Reynolds number. As the density is smaller and/or the viscosity is larger, the Reynolds number is smaller. It can be, therefore, understood that a laminar flow is apt to be formed in that case(s).

The Reynolds number representing such a critical value is called "critical Reynolds number". The critical Reynolds number is not necessarily definite. However, roughly, the following values are criteria:

| | |
|---|---|
| $Re < 2,300$ | Laminar flow; |
| $Re > 3,000$ | Turbulent flow; and |
| $3,000 \geq Re \geq 2,300$ | Transition state. |

As the equivalent diameter of a channel is smaller, the surface area per unit volume (specific surface area) of said pipe is larger. When the channel turns into a micro-scale, which is preferably a size of I mm or less, the specific surface area becomes remarkably large so that the conduction efficiency of heat through the wall of the channel becomes very high. Since the heat conduction time (t) of a fluid flowing in the channel is represented by: $t=d_{eq}^2/\alpha$ (in which $\alpha$ is the heat diffusion rate of the fluid), the heat conduction time becomes shorter as the equivalent diameter becomes smaller. That is, if the equivalent diameter becomes 1/10, the heat conduction time becomes 1/100. Thus, when the equivalent diameter is in a micro-scale, the heat conduction speed is very high. Herein, such a reaction site (reaction field) is defined to as a micro reaction site.

A reactor providing such a preferable micro reaction site, which can be preferably used in the producing method of the present invention, is commonly called "microreactor" and is being developed greatly in recent years. Typical example of the microreactor is provided with a plurality of micro-channels (each corresponding to the above-mentioned reactor) each having an equivalent diameter (in terms of the area of a circle equivalent to the section thereof) of several micrometers to several hundred micrometers; and a mixing space connected to these micro-channels. In the microreactor, plural solutions can be introduced through the plural micro-channels into the mixing space, thereby mixing the solutions, or mixing the solutions and simultaneously causing chemical reaction.

Next, the following describes major different points of reaction by use of the above-described micro-reactor from reaction based on a batch-type by use of a tank or the like. In chemical reaction of a liquid phase and chemical reaction between two liquid phases, molecules generally encounter each other on the interface between the reaction solutions, to cause the reaction. Therefore, when the reaction is conducted in a microscopic space (micro-channel), the area of the interface becomes large in relation to the space so that the efficiency of the reaction increases remarkably. In addition, about the diffusion of molecules, the diffusion time is in proportion with the square of diffusion distance. This fact means that as the scale is made smaller, the mixing of the reaction solutions advances more by the diffusion of the

molecules in the flow region, so as to cause the reaction more easily, even if the reaction solutions are not actively mixed. Further, in the microscopic space, since the scale is small, the flows tend to turn preferentially to laminar flows. Thus, the molecules existent in the solutions are diffused and exchanged from one laminar flow to another laminar flow on the interface where the solutions are in the states of laminar flows, and the solutions are mixed with each other with the transferred molecules.

When a micro-reactor, which has characteristics as described above, is used, the reaction time and temperature between the solutions therein can be more precisely controlled, compared with a conventional batch system, in which, for example, a tank having a large volume is used as a reaction site. Further, in the batch system, in particular, between solutions having a large reaction speed, sometimes reaction advances on a reaction contact face generated at the initial stage of mixing the solutions, and further a primary product generated by the reaction between the solutions subsequently undergoes reaction in the container. Therefore, there may be a possibility that the resultant product becomes non-homogeneous or that aggregation or precipitation (crystals) of the product grows beyond necessity in the mixing container (batch) to get coarse. Contrary to the above, according to a micro-reactor that can be used in the present invention, solutions hardly remain in the mixing space (e.g. a mixing container) so as to flow continuously. Consequently, it is possible to restrain a primary product generated by the reaction between the solutions from undergoing subsequent reaction while the primary product remains in the mixing space. Thus, a pure primary product, which has been hardly taken out hitherto, can be taken out.

Further, when a chemical substance that can be produced in only a small amount by use of an experimental producing-apparatus, is tried to produce in a large amount by use of large-scale manufacturing facilities (i.e. scaling up), huge labor and very long period of time have been required hitherto, to gain the reproducibility of the manufacture in large-scale manufacturing facilities of a batch system as similar as the reproducibility of the production in the experimental producing-apparatus. However, by arranging a plurality of producing lines each using a micro-reactor in parallel (numbering-up) according to a necessary production quantity, labor and time period for gaining such the reproducibility may be largely reduced.

Preferable examples of the method for forming the channel that can be used in the producing method of the present invention will be explained. It is relatively easy to form a channel with an equivalent diameter of 1 mm or more with generally known machine processing techniques, but it is exceptionally difficult to form a channel with a size of 1 mm or less (micro size), especially with a size of 500 μm or less. A micro-size channel (micro-channel) is formed on a solid substrate by micro processing technique in many cases. The material of the substrate may be any stable material that is not apt to be corroded. Examples of the material include metal (e.g. stainless steel, hastelloy (Ni-Fe based alloy), nickel, aluminum, silver, gold, platinum, tantalum, and titanium), glass, plastics, silicone, Teflon (registered trademark), and ceramics.

Representative examples of the micro processing technique for forming the micro-channel include a LIGA (Roentgen-Lithographie Galvanik Abformung) method using X-ray lithography, a high aspect ratio photolithography method using EPON SU-8 (trade name), a micro discharge processing method (μ-EDM (Micro Electro Discharge Machining)), a high aspect ratio processing method for silicon by Deep RIE (Reactive Ion Etching), a hot emboss processing method, a photo-fabrication method, a laser processing method, an ion beam processing method, and a mechanical micro cutting processing method using a micro tool made of such a hard material as diamond. These techniques may be used alone or in combination. Preferable micro processing techniques are the LIGA method using X-ray lithography, the high-aspect ratio photolithography method using EPON SU-8, the micro discharge processing method (μ-EDM), and the mechanical micro cutting processing method. In recent years, investigations have been made for applying a micro-injection molding technique to engineering plastics.

When the micro channel is assembled, a joining technique is often used. A normal joining technique is roughly divided into solid-phase joining and liquid-phase joining. In joining methods generally used, typical examples of the joining method include pressure welding and diffusion bonding as the solid-phase joining; and welding, eutectic bonding, soldering, and gluing as the liquid joining. Further, at the time of assembling, it is desirable to use a highly precise joining method in which dimension accuracy is maintained in such a way that deterioration of material due to high temperature heating, or destruction of a micro-structure such as a channel by a large deformation of material does not take place. Examples of such a technique include silicon direct joining, anode joining, surface activation joining, direct joining using hydrogen bond, joining using aqueous hydrogen fluoride solution, Au-Si eutectic bonding, and void-free bonding.

The equivalent diameter of the channel in the reactor that can be used in the producing method of the present invention is preferably 10 mm or less, more preferably 1 mm or less, further preferably 10 μm to I mm, and particularly preferably 20 to 500 μm. Further, the length of the channel is not particularly limited, but it is preferably 1 mm or more but 10 m or less, more preferably 5 mm or more but 10 m or less, and particularly preferably 10 mm or more but 5 m or less.

In the producing method of the present invention, the organic pigment fine-particles are preferably formed in a liquid dispersion, and the formation of the dispersion is preferably performed while flowing in a channel(s), that is, by a continuous flowing method. The number of channels in a flow reactor may be one. Alternately, many channels may be arranged in parallel (i.e. numbering-up) as needed, to increase a processing amount thereof. The number of channels

to be arranged in parallel is determined depending on the type and target amount of organic pigment fine-particles to be produced, and is preferably in the range of from 5 to 1,000, more preferably from 10 to 100. The channels are not limited to those formed on a solid substrate by use of the micro processing technique, and may be, for example, various available fused silica capillary tubes each having an inner diameter of several micrometers to several hundred micrometers. Various silicon tubes, fluorine-containing resin tubes, stainless steel pipes, and PEEK (polyether ether ketone) pipes, each having an inner diameter of several micrometers to several hundred micrometers, which are commercially available as parts for high-performance liquid chromatography or gas chromatography, can also be used.

Hitherto, with respect to micro-reactors, devices that are aimed to improve reaction efficiency and the like, have been reported. For example, JP-A-2003-210960, JP-A-2003-210963 and JP-A-2003-210959 are concerned with micro-mixers. In the present invention, these micro-devices may also be used.

In the producing method of the present invention, the channel may be subjected to a surface treatment according to an object. In particular, when handling an aqueous solution, since the adsorption of a sample to glass or silicon may become a problem, the surface treatment is important. In the fluid control in the micro-sized channel, it is desirable to realize this without incorporating a movable part requiring a complicated manufacturing process. For example, a hydrophilic region and a hydrophobic region are prepared in the channel by the surface treatment, so that it becomes possible to treat a fluid by using a difference in surface tension exerting on the boundary between these regions. The method used for surface-treating glass or silicon in many cases is hydrophobic or hydrophilic surface-treatment by using a silane coupling agent.

In order to introduce a reagent, sample, or the like into the channel to mix therein, a fluid control function is needed. Specifically, since the behavior of the fluid in the micro channel has properties different from those of a macro-scale, a control method appropriate for the micro-scale should be considered. A fluid control method is classified into a continuous flow system and a droplet (liquid plug) system according to the formation, while it is also classified into an electric driving system and a pressure driving system according to the driving force.

A more detailed description of these systems will be given hereinafter. The most widely used system as a formation for treating a fluid is the continuous flow system. When the flow is controlled in the continuous flow system, generally, the entire portion inside the micro-channel is filled with a fluid, and the fluid as a whole is driven by a pressure source such as a syringe pump that is provided outside the channel. In this method, although there is such a difficulty that dead volume is large, and the like, the continuous flow system has such a great merit that the control system can be realized with a relatively simple set-up.

As a system which is different from the continuous flow system, there is provided the droplet (liquid plug) system. In this system, droplets partitioned by the air are made to move inside the reactor or inside the channel leading to the reactor, and each of the droplets is driven by air pressure. During this process, a vent structure for allowing air between droplets and channel walls, or air between the droplets as necessary, to escape to the outside; a valve structure for maintaining pressure inside the branched channels independently from pressure at other portions; and the like, must be provided inside the reactor system. Further, a pressure control system having a pressure source or a switching valve must be provided outside the reactor system, in order to move the droplets by controlling the pressure difference. Thus, in the droplet system, although the apparatus configuration and the structure of the reactor become rather complicated as stated above, a multi-stage operation is enabled, for example, plural droplets are individually operated and some reactions are sequentially performed, and the degree of freedom concerning the system configuration becomes high.

As the driving system for performing the fluid control, there are generally and widely used an electrical driving method in which a high voltage is applied between both ends of a channel to generate an electro-osmotic flow, thereby fluid is moved; and a pressure driving method in which a pressure is applied to a fluid from the outside of the channel using a pressure source to move the fluid. It is known that both systems are different in that, for example, as the behavior of the fluid, the flow velocity profile in the cross-section of the channel becomes a flat distribution in the case of the electrical driving system, whereas it becomes a hyperbolic flow distribution in the pressure driving system, in which the flow velocity is high at the center of the channel and low at the wall surface part. Therefore, the electrical driving system is suitable for such an object that a movement is made while the shape of a sample plug or the like is kept. In the case where the electrical driving system is performed, since it is necessary that the inside of the channel is filled with the fluid, the form of the continuous flow system must be adopted. However, since the fluid can be treated by an electrical control, a comparatively complicated process is also realized, for example, a concentration gradient varying with time is formed by continuously changing the mixing ratio of two kinds of solutions. In the case of the pressure driving system, the control can be made irrespective of electrical properties of the fluid, and secondary effects such as heat generation or electrolysis may not be considered, and therefore, an influence on the substrate (component) hardly exists, and its application range is wide. On the contrary, a pressure source must be provided outside, and for example, response characteristics to manipulation are changed according to the magnitude of a dead volume of a pressure system, and it is necessary to automate the complicated process.

In the producing method of the present invention, although a method to be used as a fluid control method is suitably selected according to its object, the pressure driving system of the continuous flow system is preferable.

According to the producing method of the present invention, by applying external energy according to the need to an organic pigment soluble form that is soluble in an organic solvent in a flow reactor, organic pigment fine-particles can be provided, which have uniform particle diameters that cannot be attained by those of particles formed in a flask. Further, by numbering up (providing a parallel arrangement) of the flow reactors, it is possible to mass-produce the organic pigment fine-particles and an organic solvent liquid dispersion of the fine-particles, with good reproducibly.

A preferred embodiment of the producing method of the present invention can be, as stated in the above, a method of forming organic pigment fine-particles through a reaction in which external energy is applied to a solution of an organic pigment soluble form dissolved in an organic solvent, under the conditions of flow of the solution.

In the producing method of the present invention, examples of the energy to be applied include heat (including microwaves), light (particularly UV rays), and ultrasonic waves, with a particular preference be given to heating to a high temperature by heat energy. Examples of the heating to a high temperature include: heating by placing the whole reactor having a reaction channel in a container whose temperature is controllable; or by heating with a heating function, such as a metal resistance wire or polysilicon, incorporated in the reactor. Alternatively, heating and cooling effects may be given externally by bringing a Peltier device into contact with the channel. It is also possible to provide a reaction channel in a microwave generator whose specific instant and even (or uniform) heating of the inside effects and local superheating effects can be used for heating. Any other methods can be preferably employed as long as they enables to conduct instantly and high-temperature heating in the course of flow. The heating methods can be appropriately selected depending on purposes and channel materials. Among those, the method using a heating function or a microwave generator is preferably used, and the method using a heating function is particularly preferably used. With respect to the sensing of temperature, when a metal resistance wire is used, it is preferable that the same resistance wire as the heater is additionally formed, and the temperature detection is performed on the basis of the change of the resistance value of the additional wire. When the polysilicon is used, it is preferable that a thermocouple is utilized in detecting the temperature.

Fig. 1 is a plane view schematically illustrating, as a preferred embodiment of the reactor that can be used for the producing method of the present invention, an apparatus provided with a means for heating a part of the channel to a high temperature and then cooling the heated part. Fig. 2 is a sectional view showing the cross-section along the line I-I in Fig. 1. It should be noted that the present invention is not intended to be limited to these. In this embodiment of the apparatus, although the mode having a single channel is shown, it is possible to provide a plurality of channels as described above.

The reactor 10 of this embodiment has a heater 14 for heating and a Peltier device 15 for cooling. The reactor 10 has an inlet 11, an outlet 12, and a channel 13. The sectional shape of the channel 13 in a direction perpendicular to its longitudinal direction can be processed by microprocessing according to the need, and the shape is preferably nearly trapezoidal or rectangular. When the width W and depth H of the channel are set to be a micrometer size, the heat exchange rate becomes quite fast, and heating and cooling can be conducted instantly.

In the reactor 10 of this embodiment, an organic solvent solution of an organic pigment soluble form is introduced from the inlet 11. In the course of flow of the solution in a region of the channel indicated by the channel length "a" in which the heater 14 is built, the organic pigment soluble form is converted into the organic pigment. Then, through a region of the channel indicated by the channel length "b", the thus-formed organic pigment is cooled in the course of flow in a region of the channel indicated by the channel length "c" in which the cooling device of the Peltier device 15 is built, to form nuclei of the organic pigment. Then, the particles further grow in the course of the flow through the channel until they reach the outside of the channel from the outlet 12, and the resultant fine-particles are discharged and collected as a liquid dispersion containing the organic pigment fine-particles.

The conversion-reaction temperature for converting the organic pigment soluble form to the organic pigment in the channel 13, is in the range of preferably from 50 to 500°C, more preferably from 100 to 300°C, and particularly preferably from 150 to 300°C. When the reaction temperature exceeds the boiling point of the solvent for dissolving the organic pigment soluble form, the channel is kept at high pressure by providing a check valve to the inlet 11 and a pressure regulating valve to the outlet 12 so that the organic solvent would not boil in the channel. The pressure is not particularly limited, and it is preferably in the range of from 0.1 to 50 MPa, particularly preferably from 0.2 to 10 MPa.

The velocity (flow rate) of the fluid flowing in the channel 13 is preferably in the range of from 0.1 mL/hr to 300 L/hr, more preferably from 0.2 mL/hr to 30 L/hr, further preferably from 0.5 mL/hr to 15 L/hr, and particularly preferably from 1.0 mL/hr to 6 L/hr.

The organic pigment that can be obtained by the producing method of the present invention may be any of a magenta pigment, a yellow pigment, and a cyan pigment. Specifically, examples of the organic pigment include a perylene compound pigment, a perynone compound pigment, a quinacridone compound pigment, a quinacridonequinone compound pigment, an anthraquinone compound pigment, an anthanthrone compound pigment, a benzimidazolone compound pigment, a condensed disazo compound pigment, a disazo compound pigment, an azo compound pigment, an indanthrone compound pigment, a phthalocyanine compound pigment, a triaryl carbonium compound pigment, a dioxazine compound pigment, an aminoanthraquinone compound pigment, a diketopyrrolopyrrole compound pigment, a thioindigo compound pigment, an isoindoline compound pigment, an isoindolinone compound pigment, a pyranthrone

compound pigment, or an isoviolanthrone compound pigment, or a mixture thereof.

More specifically, examples of the organic pigment include perylene compound pigments, such as C.I. Pigment Red 190 (C.I. No. 71140), C.I. Pigment Red 224 (C.I. No. 71127), and C.I. Pigment Violet 29 (C.I. No. 71129); perynone compound pigments, such as C.I. Pigment Orange 43 (C.I. No. 71105), and C.I. Pigment Red 194 (C.I. No. 71100); quinacridone compound pigments, such as C.I. Pigment Violet 19 (C.I. No. 73900), C.I. Pigment Violet 42, C.I. Pigment Red 122 (C.I. No. 73915), C.I. Pigment Red 192, C.I. Pigment Red 202 (C.I. No. 73907), C.I. Pigment Red 207 (C.I. Nos. 73900 and 73906), and C.I. Pigment Red 209 (C.I. No. 73905); quinacridonequinone compound pigments, such as C.I. Pigment Red 206 (C.I. No. 73900/73920), C.I. Pigment Orange 48 (C.I. No. 73900/73920), and C.I. Pigment Orange 49 (C.I. No. 73900/73920); anthraquinone compound pigments, such as C.I. Pigment Yellow 147 (C.I. No. 60645); anthanthrone compound pigments, such as C.I. Pigment Red 168 (C.I. No. 59300); benzimidazolone compound pigments, such as C.I. Pigment Brown 25 (C.I. No. 12510), C.I. Pigment Violet 32 (C.I. No. 12517), C.I. Pigment Yellow 180 (C.I. No. 21290), C.I. Pigment Yellow 181 (C.I. No. 11777), C.I. Pigment Orange 62 (C.I. No. 11775), and C.I. Pigment Red 185 (C.I. No. 12516); condensed disazo compound pigments, such as C.I. Pigment Yellow 93 (C.I. No. 20710), C.I. Pigment Yellow 94 (C.I. No. 20038), C.I. Pigment Yellow 95 (C.I. No. 20034), C.I. Pigment Yellow 128 (C.I. No. 20037), C.I. Pigment Yellow 166 (C.I. No. 20035), C.I. Pigment Orange 34 (C.I. No. 21115), C.I. Pigment Orange 13 (C.I. No. 21110), C.I. Pigment Orange 31 (C.I. No. 20050), C.I. Pigment Red 144 (C.I. No. 20735), C.I. Pigment Red 166 (C.I. No. 20730), C.I. Pigment Red 220 (C.I. No. 20055), C.I. Pigment Red 221 (C.I. No. 20065), C.I. Pigment Red 242 (C.I. No. 20067), C.I. Pigment Red 248, C.I. Pigment Red 262, and C.I. Pigment Brown 23 (C.I. No. 20060); disazo compound pigments, such as C.I. Pigment Yellow 13 (C.I. No. 21100), C.I. Pigment Yellow 83 (C.I. No. 21108), and C.I. Pigment Yellow 188 (C.I. No. 21094); azo compound pigments, such as C.I. Pigment Red 187 (C.I. No. 12486), C.I. Pigment Red 170 (C.I. No. 12475), C.I. Pigment Yellow 74 (C.I. No. 11714), C.I. Pigment Red 48 (C.1. No. 15865), C.I. Pigment Red 53 (C.I. No. 15585), C.I. Pigment Orange 64 (C.I. No. 12760), and C.I. Pigment Red 247 (C.I. No. 15915); indanthrone compound pigments, such as C.I. Pigment Blue 60 (C.I. No. 69800); phthalocyanine compound pigments, such as C.I. Pigment Green 7 (C.I. No. 74260), C.I. Pigment Green 36 (C.I. No. 74265), Pigment Green 37 (C.I. No. 74255), Pigment Blue 16 (C.I. No. 74100), C.I. Pigment Blue 75 (C.I. No. 74160:2), and 15 (C.I. No. 74160); triaryl carbonium compound pigments, such as C.I. Pigment Blue 56 (C.I. No. 42800), and C.I. Pigment Blue 61 (C.I. No. 42765:1); dioxazine compound pigments, such as C.I. Pigment Violet 23 (C.I. No. 51319), and C.I. Pigment Violet 37 (C.I. No. 51345); aminoanthraquinone compound pigments, such as C.I. Pigment Red 177 (C.I. No. 65300); diketopyrrolopyrrole compound pigments, such as C.I. Pigment Red 254 (C.I. No. 56110), C.I. Pigment Red 255 (C.I. No. 561050), C.I. Pigment Red 264, C.I. Pigment Red 272 (C.I. No. 561150), C.I. Pigment Orange 71; and C.I. Pigment Orange 73; thioindigo compound pigments, such as C.I. Pigment Red 88 (C.I. No. 73312); isoindoline compound pigments, such as C.I. Pigment Yellow 139 (C.I. No. 56298), and C.I. Pigment Orange 66 (C.I. No. 48210); isoindolinone compound pigments, such as C.I. Pigment Yellow 109 (C.I. No. 56284), and C.I. Pigment Orange 61 (C.I. No. 11295); pyranthrone compound pigments, such as C.I. Pigment Orange 40 (C.I. No. 59700), and C.I. Pigment Red 216 (C.I. No. 59710); and isoviolanthrone compound pigments, such as C.I. Pigment Violet 31 (C.I. No. 60010).

Among those, preferred pigments are quinacridone compound pigments, diketopyrrolopyrrole compound pigments, condensed disazo compound pigments, dioxazine compound pigments, aminoanthraquinone compound pigments, or phthalocyanine compound pigments; and more preferred pigments are quinacridone compound pigments, diketopyrrolopyrrole compound pigments, azo compound pigments, dioxazine compound pigments, or aminoanthraquinone compound pigments.

In the present invention, the organic pigment soluble form is defined herein as a compound which is soluble in an organic solvent and which is convertible to an organic pigment when energy such as heat is applied thereto. The solubility of the organic pigment soluble form to an organic solvent is not particularly limited, but varies depending on the kind of organic solvent. For example, the solubility is preferably 0.5 to 50 mass%, more preferably 1 to 20 mass%, with respect to the organic solvent. Herein, the term 'solubility' means a solubility at any temperature, taking the temperature at the time of reaction into consideration, or it may be a solubility in the case where a dissolving accelerator, such as an acid or a base, is added to the system. Examples of the organic pigment soluble form include a compound in which a hydrogen atom contributing to a hydrogen bond, in the chemical structure of the organic pigment concerned, is substituted by a thermolytic group, i.e. a group that undergoes decomposition via pyrolysis, and a preferred example of the compound has a thermolytic oxycarbonyl group as a substituent for such a hydrogen atom. Particularly preferable examples of the organic pigment soluble form (also referred to as a potential pigment) are shown below, but the present invention is not intended to be limited to those.

(1) 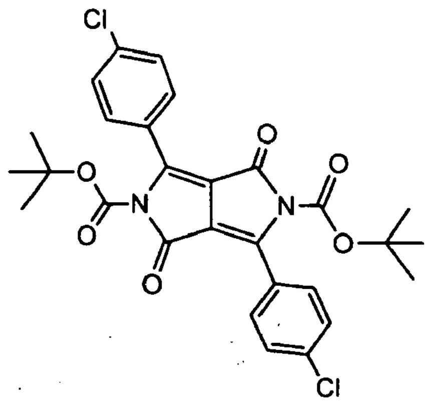

(2) 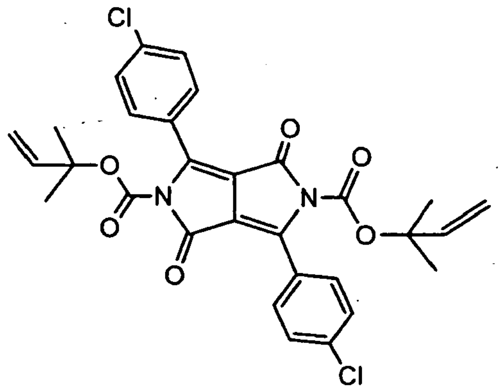

(3) 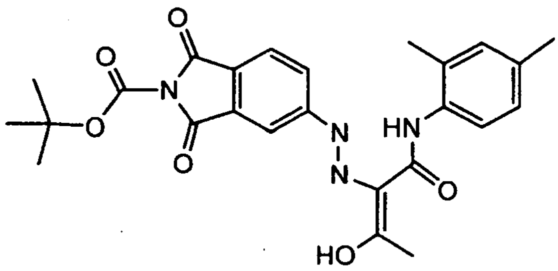

(4)

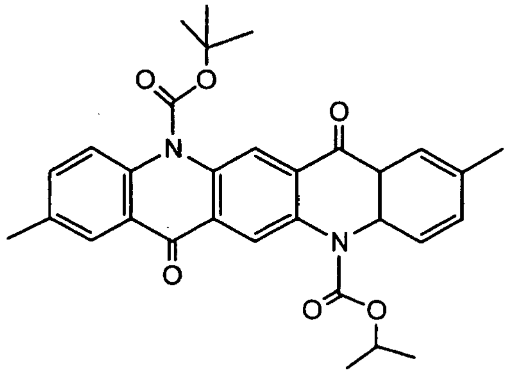

(5)

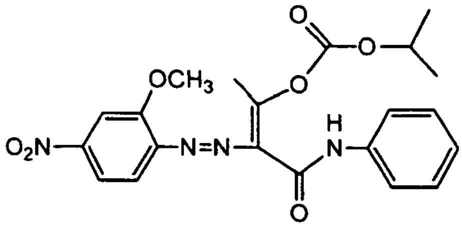

(6)

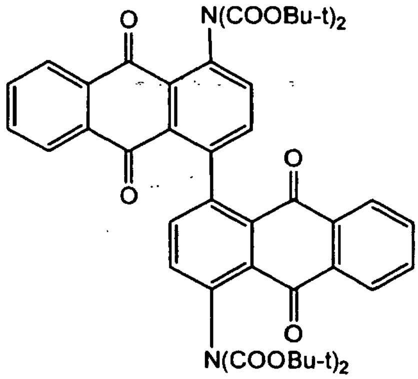

(7)

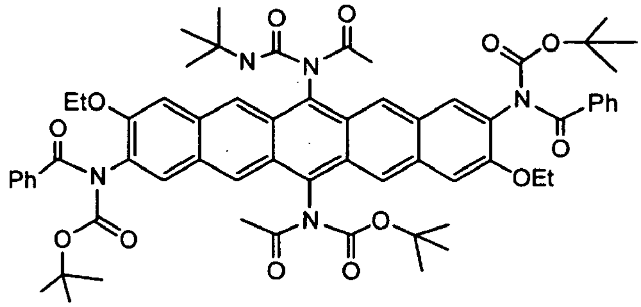

(8)

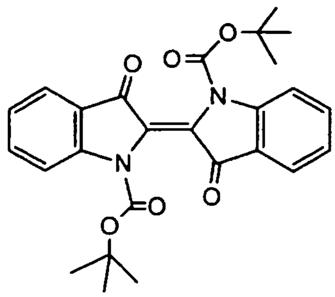

(9)

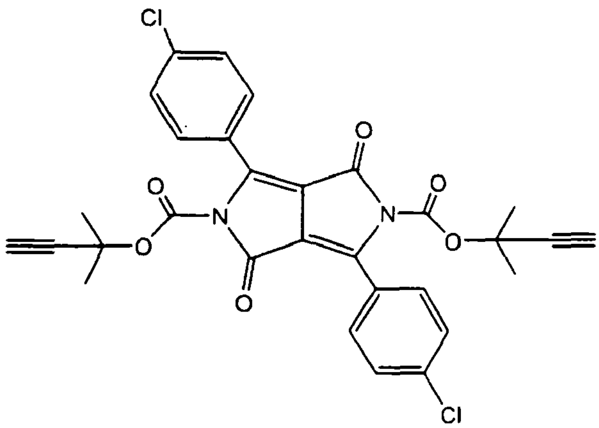

(10)

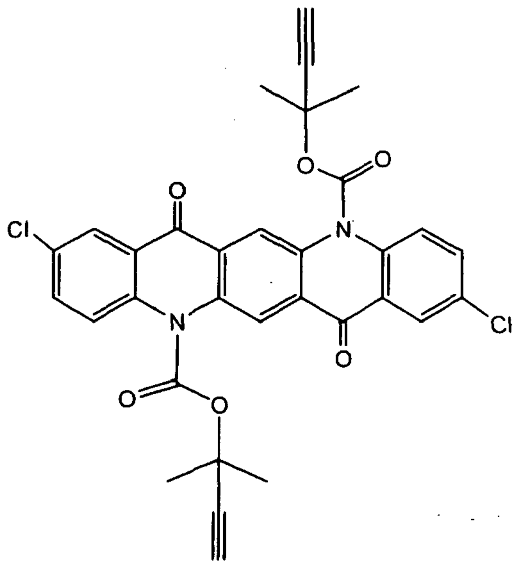

(11)

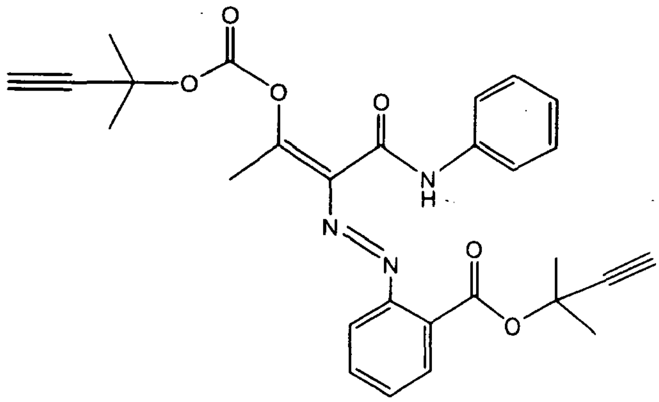

The above exemplified compounds can be synthesized in a usual manner, for example, according to the methods described in JP-A-8-6242 or JP-A-2005-55495.

Examples of the organic solvent which dissolve the organic pigment soluble form for use in the producing method of the present invention, include fluorine-containing compound alcohols (e.g. 2,2,3,3-tetrafluoro-1-propanol), amide compound solvents (e.g. dimethylformamide, dimethylacetamide, N-methylpyrrolidone, 1,3-dimethyl-2-imidazolidinone), sulfoxide compound solvents (e.g. dimethylsulfoxide, sulfolane), ether compound solvents (e.g. tetrahydrofuran), halogen-containing compound solvents (e.g. chloroform, dichloromethane), alcohol compound solvents (e.g. methanol, ethanol, ethylene glycol, propylene glycol, diethylene glycol), lower alkyl ether compound solvents (ethylene glycol mono-methyl (or -ethyl) ether, diethylene glycol mono-methyl (or -ethyl) ether, triethylene glycol mono-ethyl (or -butyl) ether), ketone compound solvents (e.g. acetone, methyl ethyl ketone, cyclohexanone), hydrocarbon compound solvents (e.g. n-hexane, toluene), nitrile compound solvents (e.g. acetonitrile), and ester compound solvents (e.g. ethyl acetate). The solvent is preferably an alcohol, nitrile, or ester compound solvent, and particularly preferably a solvent selected from the alcohol, nitrile, or ester compound solvents whose boiling point is 150°C or less. These solvents may be used singly, or in combination thereof. These solvents are not necessarily anhydrous solvents and each may contain water to an extent that the organic pigment soluble form does not cause precipitation and the organic solvent does not cause phase separation.

The amount of the organic solvent to be used is not particularly limited as long as it is an amount capable of dissolving the organic pigment soluble form homogeneously, and the amount of the organic solvent is preferably in the range of from 10 to 500 times, more preferably from 20 to 100 times, the amount of the organic pigment soluble form in terms of mass ratio.

In the producing method of the present invention, it is preferable to convert the organic pigment soluble form into the organic pigment and make the resultant pigment fine as fine-particulates, in the presence of a dispersing agent; and it is more preferable to add, into a solution of the organic pigment soluble form dissolved in an organic solvent, a dispersing agent which can stabilize the organic pigment fine-particles. The dispersant has a function: (1) in that it is rapidly adsorbed on the surface of the precipitated organic pigment fine-particles, to form fine particulates; and (2) in that these particulates are prevented from aggregating again. In the producing method of the present invention, as the dispersing agent, use can be made of a nonionic or pigmentary, low-molecular-weight dispersing agent, or a polymer dispersing agent. These dispersing agents may be used alone or in combination.

Examples of the nonionic dispersing agent (nonionic surfactant) include polyoxyethylene alkyl ethers, polyoxyethylene alkyl aryl ethers, polyoxyethylene fatty acid esters, sorbitan fatty acid esters, polyoxyethylene sorbitan fatty acid esters, polyoxyethylene alkylamines, and glycerin fatty acid esters. Among these, polyoxyethylene alkyl aryl ethers are preferable. These nonionic dispersing agents may be used alone or in combination of two or more thereof.

The (organic) pigmentary dispersing agent is defined as a pigmentary dispersing agent derived from an organic pigment as a parent substance, and prepared by chemically modifying a structure of the parent substance. Examples of the pigmentary dispersing agent include sugar-containing pigmentary dispersing agents, piperidyl-containing pigmentary dispersing agents, naphthalene- or perylene-derivative pigmentary dispersing agents, pigmentary dispersing agents having a functional group linked through a methylene group to a pigment parent structure, pigmentary dispersing agents (parent structure) chemically modified with a polymer, pigmentary dispersing agents having a sulfonic acid group, pigmentary dispersing agents having a sulfonamido group, pigmentary dispersing agents having an ether group, and pigmentary dispersing agents having a carboxylic acid group, carboxylic acid ester group or carboxamido group.

Specific examples of the polymer dispersing agent include polyvinyl pyrrolidone, polyvinyl alcohol, polyvinyl methyl ether, polyethylene oxide, polyethylene glycol, polypropylene glycol, polyacrylamide, vinyl alcohol/vinyl acetate copolymers, partial-formal products of polyvinyl alcohol, partial-butyral products of polyvinyl alcohol, vinylpyrrolidone/vinyl acetate copolymers, polyethylene oxide/propylene oxide block copolymers, polyacrylic acid salts, polyvinyl sulfuric acid salts, poly(4-vinylpyridine) salts, polyamides, polyallylamine salts, condensed naphthalenesulfonic acid salts, styrene/acrylic acid salt copolymers, styrene/methacrylic acid salt copolymers, acrylic acid ester/acrylic acid salt copolymers, acrylic acid ester/methacrylic acid salt copolymers, methacrylic acid ester/acrylic acid salt copolymers, methacrylic acid ester/methacrylic acid salt copolymers, styrene/itaconic acid salt copolymers, itaconic acid ester/itaconic acid salt copolymers, vinylnaphthalene/acrylic acid salt copolymers, vinylnaphthalene/methacrylic acid salt copolymers, vinylnaphthalene/itaconic acid salt copolymers, cellulose derivatives, and starch derivatives. Besides, any of natural polymers can be used, examples of which include alginic acid salts, gelatin, albumin, casein, gum arabic, tragacanth gum, and ligninsulfonic acid salts. These polymer dispersing agents may be used alone or in combination of two or more thereof.

In the present invention, the amount of the dispersing agent to be used is preferably in the range of from 0.1 to 250 parts by mass, more preferably from 1 to 100 parts by mass, to 100 parts by mass of the organic pigment, to further improve the uniform dispersity and storage stability of the organic pigment fine-particles.

In the measuring method of fine-particles, the average size of the group of the particles can be expressed by a numerical value. Examples of the numerical value which is widely used, include mode diameter, which shows the maximum value of the particle size distribution; median diameter, which corresponds to the central value of the integrated distribution curve thereof; and various average diameters (e.g. length average diameter, volume average diameter, area average diameter, weight average diameter, and number average diameter). The particle diameter (size) of the organic pigment fine-particles produced by the method of the present invention is arbitrary as far as the channel is not blocked, and the particle diameter is preferably 1 $\mu$m or less, particularly preferably from 3 nm to 50 nm, in terms of median diameter.

There is polydispersity as an index showing that particle sizes of fine-particles are even, specifically as an index showing the monodispersity of fine-particles. The polydispersity is obtained by dividing the volume average diameter (Mv) by the number average diameter (Mn). When this Mv/Mn value is close to 1, that shows a very sharp distribution (so-called monodispersion), whereas when the value is large, that shows a broad distribution. The organic pigment fine-particles produced by the producing method of the present invention have an Mv/Mn value of preferably 1.2 to 2.5, more preferably 1.2 to 1.8. According to the present invention, the organic solvent-dispersible, organic pigment fine-particles, can be obtained, which have small and even particle diameters, and which can be stably dispersed in an organic solvent.

It is preferred that the organic pigment fine-particles according to the present invention have dispersibility in an organic solvent, which means that the organic pigment fine-particles are stably dispersible in the organic solvent. The organic solvent will be explained below. The organic solvent to be used for dispersing the organic pigment fine-particles has the same meaning to the aforementioned organic solvent which dissolves the organic pigment soluble form. Examples thereof include alcohol compound solvents (e.g. methanol, ethanol, ethylene glycol, propylene glycol, diethylene glycol), lower alkyl ether compound solvents (ethylene glycol mono-methyl (or -ethyl) ether, diethylene glycol mono-methyl (or -ethyl) ether, triethylene glycol mono-ethyl (or -butyl) ether), ketone compound solvents (e.g. acetone, methyl ethyl ketone, cyclohexanone), hydrocarbon compound solvents (e.g. n-hexane, toluene), nitrile compound solvents (e.g. acetonitrile), and ester compound solvents (e.g. ethyl acetate). The solvent is particularly preferably an alcohol

compound solvent, a ketone compound solvent, or an ester compound solvent, and particularly preferably a solvent selected from the alcohol, ketone, or ester compound solvents whose boiling point is 150°C or less. These solvents may be used singly or in combination thereof. Further, these solvents may be hydrous solvents and the water content therein is preferably 50 mass% or less, and particularly preferably 20 mass% or less.

According to the producing method of the present invention, excellent organic pigment fine-particles can be produced, by a flow reaction using a channel, with controlling the reaction time, further by utilizing preciseness on the reaction temperature control in a small space. Further, according to the producing method of the present invention, organic pigment fine-particles can be produced, which have remarkably smaller and more uniform particle diameters than those produced by the conventional batch method, i.e. reaction in a flask or the like. Furthermore, utterly different from the conventional techniques, according to the producing method of the present invention, by numbering up (by taking parallel arrangement) of channels, the organic pigment fine-particles can be produced, with scaling-up, with good reproducibility, but without losing the above excellent fine-particle characteristics, thereby to make it possible to remarkably reduce the lead time in production.

According to the producing method of the present invention, while converting the organic pigment soluble form into the pigment in the course of flowing in an organic solvent, simultaneously particle formation is carried out, and organic pigment fine-particles small in particle diameter, which exhibit stable dispersibility to solvents, can be efficiently produced.

Further, according to the producing method of the present invention, by conducting a reaction in the channel small in the equivalent diameter, organic pigment fine-particles can be produced, with the reaction time and reaction temperature precisely controlled. Furthermore, by numbering up (by taking parallel arrangement) of such channels, the organic pigment fine-particles with a small particle diameter and a small distribution of said particle diameter and an organic solvent liquid dispersion of such fine-particles can be produced in a mass scale, with good reproduction, without losing the above excellent fine-particle properties.

The present invention will be described in more detail based on the following examples, but the invention is not intended to be limited thereto.

## EXAMPLES

In the examples and the comparative examples, particle diameter distribution was measured using Microtrack UPA150 (trade name), manufactured by Nikkiso Co., Ltd.

(Example 1)

In 99 g of cyclopentanone, was dissolved 1.0 g of Exemplified compound (1), which is an organic pigment soluble form of PR254, under heating to some degree while stirring, and then the temperature of the resultant liquid was returned to room temperature. To the resultant mixture, as a dispersing agent, 0.2 g of EFKA46, which is a modified polyurethane-based polymer dispersing agent, was added. The resultant mixture was filtered through a 0.45-μm microfilter (manufactured by Fuji Photo Film Co., Ltd.), to remove impurities such as foreign particles, thereby to obtain an IA liquid. As the reactor capable of heating and cooling, as shown in Fig. 1, the reactor body 10 made of ceramics, in which the channel 13 (equivalent diameter 300 μm) of the channel width (W) and depth (H) each 300 μm, the length of the channel region "a" 2 cm, the length of the channel region "b" 2 cm, and the length of the channel region "c" 5 cm was formed, was provided. To the reactor 10, two tubes made of Teflon (registered trademark) were connected to the inlet 11 with a check-valve connector. At the tip of each tube, the tubes each were connected to a syringe filled with the IA liquid, and the syringes each were set to a pump. Separately, the outlet 12 was connected with a connector having a pressure regulating valve therebetween, and a tube made of Teflon (registered trademark) was connected to the outlet 12 via the connector. The reactor body 10 had a size of 12 cm x 6 cm x 10 mm. The heater 14 of size 2 cm x 1 cm x 1 mm was integrally built in the reactor, when producing the reactor by sintering ceramics of green state. The heater was wired to a power source at the outside of the reactor. To a space of 5 cm x 1 cm x 5 mm in the reactor, the Peltier device 15 of the cooler was fitted. The solution flowing in the channel 13 was heated to 300°C with the heater 14 turned, on and then cooled down to 25°C by cooling with the Peltier device 15. The temperature was controlled with a sensor. The IA liquid was injected from the inlet 11 at a flow rate of 20 μL/min. As a result, a cyclopentane liquid dispersion containing fine-particles of PR254 was obtained from the outlet 12. The IA liquid was injected to the reactor for one hour, and the resultant liquid dispersion was collected at the tip of the tube. Then, the particle diameter distribution of the fine-particles in the thus-obtained liquid dispersion was measured with a dynamic light scattering particle-size measuring device. As a result, the median diameter was 45 nm, and the Mv/Mn value, which is an index of monodispersity, was 1.60. Furthermore, almost no change was observed with respect to the median diameter and the Mv/Mn value, after the thus-obtained liquid dispersion had been left for one month at room temperature.

(Example 2)

Ten microchannel reactors, as used in the above-mentioned reaction, were arranged in parallel. Two manifolds each were provided at each tip of two syringes so as to make ten flows and feed the liquid to the inlet of each channel. The IA liquid was collected for a successive one hour, from the tip of each tube connected to the outlet 14 where the liquid was fed out at a flow rate of 200 μL/min. As a result, the whole reactors of numbered-up increased the productivity per unit hour to ten-fold, as compared to that in the above Example 1. Further, with respect to the thus-obtained fine-particles, the particle diameter (median diameter) was 46 nm, and the Mv/Mn value, an index of monodispersity was 1.59. Resultantly, almost no change was observed in the particle diameter distribution due to the scaling up (numbering up).

(Comparative Example 1)

Into an autoclave, 1.2 g of the IA liquid, as prepared in Example 1, was placed, followed by stirring under heating to 300°C. After one hour, the resultant liquid was returned to room temperature, and the particle diameter distribution of the liquid was measured with a dynamic light scattering particle-size measuring device. As a result, the median diameter was 105 nm, and the Mv/Mn value, an index of monodispersity was 3.0. From the results, it can be understood that the particle diameter was quite larger and the particle diameter distribution was conspicuously broader, than those of the fine-particles produced via the reaction with the flow reactor(s).

Further, the reaction was conducted in the same manner as above, except for using 12 g of the IA liquid (10-fold scaled up). As a result, the median diameter was 130 nm, and the Mv/Mn value was 4.5. Those results means that both the particle diameter and the particle diameter distribution changed largely. Consequently, it can be understood that the conventional batch method resulted in a quite large median diameter of the resultant fine-particles, which were also poor in monodispersity, and further that the fine-particles' properties were changed largely upon scaling-up of the batch method.

(Example 3)

Pigment fine-particles were produced in the same manner as in Example 1, except that the Exemplified compound (1) was replaced with the same amount of Exemplified compound (4), which is an organic pigment soluble form of PR122. The particle diameter distribution of the fine-particles in the liquid dispersion that was obtained using a single channel, was measured with a dynamic light scattering particle-size measuring device. As a result, the median diameter was 30 nm, and the Mv/Mn value, an index of monodispersity was 1.55.

Further, fine-particles were obtained in the same manner as in Example 2 with ten microchannel reactors arranged in parallel, except for using Exemplified compound (4). With respect to the thus-obtained fine-particles, the particle diameter (median diameter) was 31 nm, and the Mv/Mn value was 1.57. As can be seen from the results, almost no change was observed on the particle diameter distribution due to the scaling up.

(Comparative Example 2)

Pigment fine-particles were synthesized in the same manner as in Comparative Example 1, except that the Exemplified compound (1) was replaced with the same amount of Exemplified compound (4). With a small scale, the median diameter was 95 nm, and the Mv/Mn value was 2.8. After scaling up in the same manner as above, the median diameter was 120 nm, and the Mv/Mn value was 3.5.

From the above results, it can be understood that the organic pigment fine-particles obtained by using a microchannel(s) of a flow-type according to the present invention exhibit excellent characteristics, and show a quite smaller change of the fine-particle characteristics upon scaling up.

## Claims

**1.** A method of producing organic pigment fine-particles, comprising the steps of:

bringing a solution of an organic pigment soluble form dissolved in an organic solvent in a flow reactor; and
converting the organic pigment soluble form into an organic pigment in the course of flow of said solution.

**2.** The method of producing organic pigment fine-particles according to Claim 1, wherein the organic pigment soluble form is a compound convertible to the organic pigment through a thermal reaction.

**3.** The method of producing organic pigment fine-particles according to Claim 2, wherein the conversion of the organic pigment soluble form into the organic pigment while flowing is carried out by heating to 150°C or higher.

**4.** The method of producing organic pigment fine-particles according to any one of Claims 1 to 3, wherein the conversion of the organic pigment soluble form into the organic pigment is carried out, in the presence of a dispersing agent which can stabilize the organic pigment fine-particles.

**5.** The method of producing organic pigment fine-particles according to any one of Claims 1 to 4, wherein the flow reactor has a channel of an equivalent diameter of 1 mm or less.

**6.** The method of producing organic pigment fine-particles according to Claim 5, wherein the reactor having the channel of an equivalent diameter of 1 mm or less is a microreactor.

**7.** Organic pigment fine-particles produced by the method according to any one of Claims 1 to 6.

**8.** The method of producing organic pigment fine-particles according to any one of Claims I to 6, wherein the organic pigment fine-particles are produced as a liquid dispersion thereof.

**9.** A liquid dispersion of organic pigment fine-particles produced by the method according to Claim 8.

Fig. 1

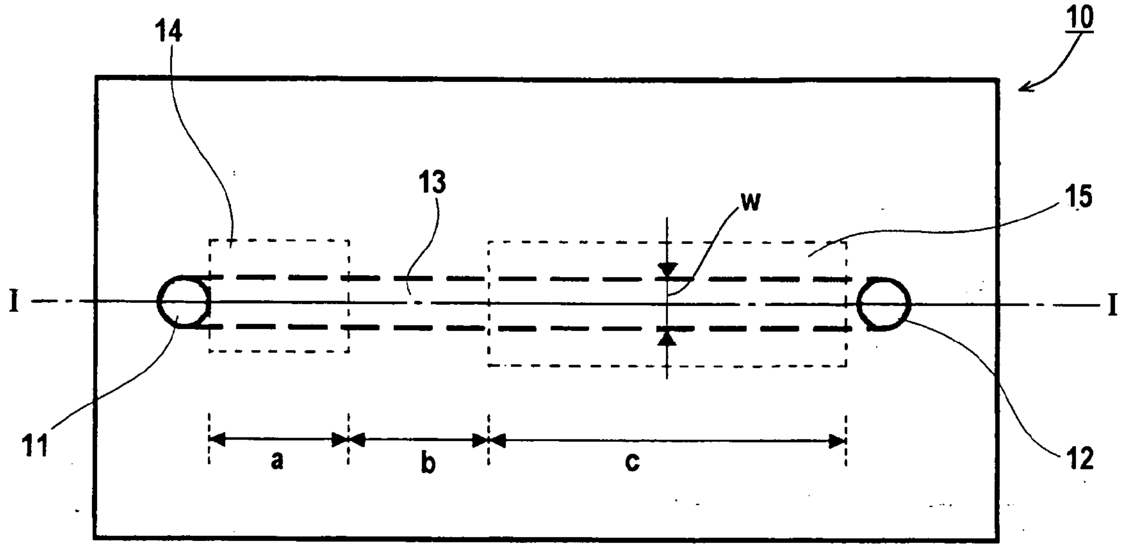


Fig. 2

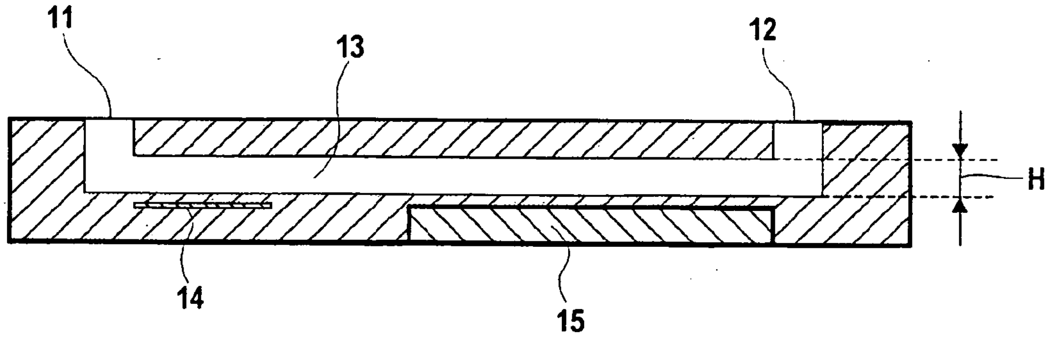

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6079168 A
- JP 2004091560 A
- JP 2005307154 A
- JP 8006242 A
- JP 2001081350 A
- JP 2003210960 A
- JP 2003210963 A
- JP 2003210959 A
- JP 2005055495 A


### Non-patent literature cited in the description


- Nanoscience and Technology -Single Organic Nanoparticles. Spring-Verlag, 2003
- **W. EHRFELD ; V. HESSEL ; H. LOEWE.** Microreactor. Wiley-VCH, 2000
- Kikai Kougaku Jiten (Dictionary of Mechanical Engineering. Maruzen, K. K, 1997